# EUROPÄISCHE PATENTSCHRIFT

(11) **EP 3 181 528 B1**
(45) Veröffentlichungstag und Bekanntmachung des Hinweises auf die Patenterteilung: **10.04.2019**
(21) Anmeldenummer: 15200945.2
(22) Anmeldetag: 17.12.2015
(51) Int. Cl.: B65G 17/12, C03B 35/04, B65G 17/46, B65G 19/02, C03B 35/26

(54) **FÖRDERKETTE ZUM TRANSPORT VON GLASBEHÄLTERN DURCH EINEN OFEN MIT ALS KETTENLASCHEN AUSGEBILDETEN STÜTZEN SOWIE FÖRDEREINRICHTUNG MIT EINER SOLCHEN FÖRDERKETTE**
CONVEYOR CHAIN FOR TRANSPORTING GLASS CONTAINERS THROUGH A FURNACE WITH SUPPORTS IN THE FORM OF CHAIN STRAPS AND CONVEYING DEVICE COMPRISING SUCH A CONVEYOR CHAIN
CHAINE DE TRANSPORT DE RECIPIENTS EN VERRE A TRAVERS UN FOUR COMPRENANT DES SUPPORTS CONÇUS COMME DES MAILLONS ET DISPOSITIF DE TRANSPORT DOTE D'UNE TELLE CHAINE DE TRANSPORT

(43) Veröffentlichungstag der Anmeldung: 21.06.2017
(73) Patentinhaber: Hans Hoffmann Trocken- und Lackierofenfabrik Apparatebau GmbH & Co. KG, 12057 Berlin (DE)
(72) Erfinder: Große-Inkrott, Helmut, 10999 Berlin (DE)
(74) Vertreter: Grünecker Patent- und Rechtsanwälte PartG mbB

(56) Entgegenhaltungen:
- EP-A1- 2 243 747
- EP-B1- 0 960 863
- WO-A1-2014/044714
- WO-A1-2017/093077
- GB-A- 2 270 060

## Beschreibung

Die Erfindung betrifft eine Förderkette zum Transport von insbesondere flaschenförmigen Glasbehältern durch einen Ofen, mit quer zu einer Förderrichtung beabstandet voneinander und parallel zueinander angeordneten Kettenlaschen.

Eine derartige Ofenkette ist beispielsweise aus der EP 0 960 863 B1 bekannt. Nachteilig bei dieser Kette ist der schwere und komplizierte Aufbau.

Der Erfindung liegt folglich die Aufgabe zugrunde, eine Ofenkette zu schaffen, die einfach aufgebaut ist und wenig Material benötigt.

Gelöst wird diese Aufgabe dadurch, dass die Kettenlaschen an ihrer Oberseite Sitze für ein Ende der Glasbehälter ausbilden.

Diese Ausgestaltung bietet gegenüber der Lösung der EP 0 960 863 B1 gleich mehrere Vorteile. So kann auf zusätzliche Stützen und eine die Stützen tragende Struktur verzichtet werden. Dadurch, dass ein Ende der Glasbehälter auf den Kettenlaschen aufliegt, müssen die Kettenlaschen weiter voneinander beabstandet sein. Aufgrund der weiter voneinander beabstandeten Kettenlaschen kann die Antriebskraft besser über die Kette verteilt werden.

Die erfindungsgemäße Lösung kann durch die folgenden, jeweils für sich vorteilhaften und beliebig miteinander kombinierbaren Ausgestaltungen weiter verbessert werden.

Bevorzugt werden die Glasbehälter auf der Förderkette querliegend transportiert. Die Längsachse der Glasbehälter verläuft dabei insbesondere quer zur Förderrichtung, also der Längserstreckung der Kettenlasche.

Gemäß einer weiteren vorteilhaften Ausgestaltung können die Kettenlaschen in Breitenrichtung der Förderkette, also quer zur Förderrichtung, gleich verteilt sein, um die Antriebskraft über die gesamte Breite gleichmäßig zu verteilen. Bei dieser Ausgestaltung wirkt die auf die Förderkette übertragene Antriebskraft auch in der Mitte der Förderkette, so dass die Förderkette mittig von unten abgestützt werden kann, ohne in Gefahr zu laufen, dass sie in der Mitte ruckelt.

In Breitenrichtung der Förderkette sind nebeneinander wenigstens vier Kettenlaschen mit Sitzen vorgesehen. Zwischen den nebeneinander liegenden Kettenlaschen kann sich eine Aufnahme für den sich nicht im Sitz der Kettenlasche befindlichen Bereich eines Glasbehälters befinden. Bevorzugt weisen sämtliche Kettenlaschen der Förderkette Sitze für die Glasbehälter auf.

Bevorzugt ist ein Sitz von wenigstens einer Vertiefung der Oberkante einer Kettenlasche gebildet. In dieser Vertiefung kann das Ende des Glasbehälters, bevorzugt ein Hals oder ein Kragen, in Förderrichtung stabil aufgenommen werden. Der Sitz kann insbesondere eine V-, U-förmige oder generell muldenförmige Vertiefung oder Ausnehmung an der Oberkante der Kettenlasche sein. Pro Kettenlasche sind bevorzugt mehrere Sitze vorgesehen, beispielsweise zwischen zwei und fünf Sitze. Ein Sitz kann auch gemeinsam von zwei in Förderrichtung aufeinanderfolgenden Kettenlaschen, insbesondere deren zueinander weisenden Enden gebildet sein.

Um eine exakte Positionierung der Glasbehälter auf der Förderkette zu erreichen und eine automatische Bestückung und Entnahme der Glasbehälter zu ermöglichen, ist es von Vorteil, wenn in Förderrichtung aufeinanderfolgende Kettenlaschen miteinander fluchten.

Gemäß einer weiteren vorteilhaften Ausgestaltung kann sich zwischen zwei quer zur Förderrichtung benachbarten Kettenlaschen wenigstens ein Paar von Tragstäben zur Auflage eines anderen Endes des Glasbehälters erstrecken. Auf den beiden Tragstäben kann auf diese Weise beispielsweise das Ende mit der Umfangsfläche des Bodens des Glasbehälters an zwei Punkten entlang seines Umfanges ruhen. Dadurch ist ein minimaler Kontakt der Glasbehälter mit der Förderkette bei gleichzeitig sicherer Positionierung sichergestellt, was insbesondere bei der Wärmebehandlung von großflächig bedruckten Glasbehältern von Vorteil ist, weil der Druck durch den Transport auf der Förderkette nicht beschädigt wird. Außerdem kann die Luft im Ofen durch die Tragstäbe nahezu ungestört zirkulieren.

Zur exakten Ablage der Glasbehälter sollte das wenigstens eine Paar von Tragstäben in Richtung quer zur Förderrichtung mit den Sitzen mehrerer paralleler Kettenlaschen fluchten. Ebenso können die Sitze von Kettenlaschen, die quer zur Förderrichtung benachbart sind, miteinander fluchten.

Zur einfachen Montage können die Tragstäbe einfach durch mehrere Kettenlaschen hindurch gesteckt sein. Die Tragstäbe können sich über die gesamte Breite, zumindest aber die gesamte Förderbreite, auf der die Glasbehälter auf der Förderkette abgelegt werden können, der Förderkette einstückig erstrecken. Bevorzugt verlaufen sämtliche Tragstäbe parallel zueinander.

Um Glasbehälter mit stark unterschiedlichen Durchmessern transportieren zu können, kann gemäß einer weiteren vorteilhaften Ausgestaltung zwischen einem Paar von Tragstäben sich wenigstens ein weiteres, weiter von dem Sitz beabstandetes Paar von Tragstäben erstrecken. Das weitere Paar ist folglich in Förderrichtung weniger weit voneinander beabstandet und kann somit Glasbehälter abstützen, die ansonsten aufgrund ihres geringen Durchmessers zwischen das Paar von weiter beabstandeten Kettenlaschen fallen würden.

Um die Antriebskraft, die in die Förderkette eingeleitet wird, gleichmäßig über die gesamte Breite der Förderkette zu erstrecken, ist gemäß einer weiteren vorteilhaften Ausgestaltung vorgesehen, dass sich die Kettenbolzen über die gesamte Breite, zumindest aber die Förderkette, der Förderkette erstrecken und nebeneinander liegende Kettenbolzen miteinander verbindet.

Zwischen nebeneinander liegenden Kettenlaschen befindet sich bevorzugt eine Aufnahme für das andere Ende eines Glasbehälters, dessen eines Ende in dem Sitz aufgenommen ist. Die Kettenlaschen liegen also nicht unmittelbar nebeneinander, sondern sind, abhängig von der längsten Länge der zu transportierenden Glasbehälter, voneinander beabstandet. Insbesondere ist der Abstand zwischen zwei nebeneinander liegenden Kettenlaschen größer als die Länge der längsten von der Förderkette zu transportierenden Glasbehälter. Diese Länge wird üblicherweise vor der Fertigung der Förderkette festgelegt.

Die Kettenbolzen selbst können ebenfalls als Auflage für Glasbehälter dienen, beispielsweise in Zusammenwirkung mit einem Tragstab.

Bevorzugt weisen die Tragstäbe einen deutlich geringeren Durchmesser als die Kettenbolzen auf. So kann der Kettenbolzen den 2- bis 10-fachen Durchmesser der Tragstäbe aufweisen. Die Tragstäbe können relativ dünn sein und einen Durchmesser von etwa 3 bis 8 mm aufweisen. Die Kettenbolzen können einen Durchmesser zwischen 10 und 30 mm aufweisen.

Der Zusammenhalt der Förderkette kann gemäß einer weiteren vorteilhaften Ausgestaltung durch wenigstens ein Paar von quer zur Förderrichtung beabstandet angeordneten Kettenlaschen mit einem in Förderrichtung folgenden Paar von vorzugsweise entsprechend fluchtenden Kettenlaschen durch ein zwischen den beiden Paaren angeordnetes U-förmiges Kettenelement miteinander verbunden sein.

Das U-förmige Kettenelement kann an seinen quer zur Förderrichtung gelegenen Enden mit zwei parallel zu den Kettenlaschen ausgerichteten Laschenbereichen versehen sein, die durch einen parallel zu den Kettenbolzen verlaufenden Steg miteinander verbunden sind.

Eine gute Übertragung der Antriebskräfte quer zur Förderrichtung wird erreicht, wenn der Steg mit seiner Flachseite parallel zur Ebene der Förderkette verläuft. Das Kettenelement kann, wie im Übrigen auch die Kettenlaschen, ein einfaches Stanz-Biegeteil sein. Die Laschenbereiche und die Kettenlaschen sind bevorzugt flächige Bereiche.

Das Kettenelement kann als Abstandshalter zweier quer zur Förderrichtung benachbarter Kettenlaschen dienen. In Förderrichtung wechseln sich ein Paar von Kettenlaschen und ein Kettenelement bevorzugt ab.

Im Ketteninneren ist bevorzugt jede Kettenlasche jeweils an einem Ende zwischen zwei Kettenelementen angeordnet. Das Kettenelement kann dabei in Förderrichtung kürzer sein als die Kettenlaschen, so dass in Förderrichtung miteinander fluchtende Kettenlaschen zwischen sich kaum einen Spalt aufweisen, wenn sie oberhalb der Kettenelemente in und/oder entgegen der Förderrichtung einen Fortsatz aufweisen, der Teil eines Sitzes bildet und das darunter liegende Kettenelement jeweils überragt.

An jedem Ende des Kettenbolzens kann eine Rolle fixiert sein, damit die Förderkette an ihren beiden Seiten auf Schiene abrollen kann.

Die Förderkette kann mit einer Mehrzahl von Umlenkrädern kombiniert sein, um die herum sie endlos verläuft. Mindestens drei derartiger Umlenkräder können in axialer Richtung über die Breite der Förderkette an den Umlenkstellen verteilt sein, um die Antriebskräfte gleichmäßig quer zur Förderrichtung zu verteilen.

Ein Förderer mit einer Förderkette in einer der obigen Ausgestaltungen kann wenigstens eine schienenförmige Auflage aufweisen, auf der in Förderrichtung hintereinanderliegende Kettenlaschen in Förderrichtung verschieblich aufliegen. Diese Ausgestaltung hat den Vorteil, dass die Höhe, in der die Glasbehälter in den Sitzen der Kettenlaschen aufliegen, innerhalb der engen Toleranzen der Kettenlaschen genau bestimmt ist, da zwischen der Auflage und den Glasbehältern nur die Kettenlasche angeordnet ist. Diese Art der Abstützung eignet sich besonders für Bereiche, in denen auf die Glasbehälter mechanisch eingewirkt wird. Auf den Auflagen gleiten die Kettenlaschen in Förderrichtung während des Betriebs des Förderers. Um die Reibung zu verringern, können die Schienen mit auswechselbaren Gleitflächen, beispielsweis aus Kunststoff oder poliertem Stahl, versehen sein.

In einer weiteren vorteilhaften Ausgestaltung kann der Förderer mit wenigstens einer schienenförmigen Abstützung versehen sein, auf der sich zwischen den Kettenlaschen erstreckende Stege, insbesondere die Stege der Kettenelemente, in Förderrichtung verschieblich aufliegen. Diese Ausgestaltung ist insbesondere bei gleichzeitiger Verwendung der schienenförmigen Auflage sinnvoll, wobei die wenigstens eine Abstützung und die wenigstens eine Auflage in Förderrichtung hintereinander angeordnet sein können. Auf eine schienenförmige Auflage kann bei einer derartigen Ausgestaltung eine schienenförmige Abstützung oder umgekehrt folgen. Die Verwendung wenigstens einer Auflage und wenigstens einer schienenförmigen Abstützung verteilt den Verscheiß der Förderkette gleichmäßig auf die Kettenlaschen und die Stege.

Die Kettenlaschen können nach unten hin, also an der von den Sitzen abgewandten Seite der Kettenlaschen über die übrigen Elemente der Förderkette vorstehen. In dieser Ausgestaltung können die Unterkanten der Kettenlaschen, sofern sie auf wenigstens einer Auflage aufliegen, eine Art Kufe bilden, auf der die Förderkette mit geringer Reibung gleitend verschieblich ist.

Eine seitliche Stabilisierung der Förderkette kann erreicht werden, wenn in Förderrichtung hintereinander angeordnete Kettenlaschen an ihrer von den Sitzen abgewandten Unterseite zwischen zwei quer zur Förderrichtung gegenüberliegenden Führungswänden in Förderrichtung verschieblich geführt sind. Bevorzugt liegt die Reihe der zwischen den Führungswänden geführten Kettenlaschen in der Mitte der Förderkette quer zur Förderrichtung. Durch die Führungswände wird eine seitliche Stabilisierung der Förderkette erreicht. Die zwischen den Führungswänden liegenden Kettenlaschen können nach unten hin gegenüber den quer zur Förderrichtung daneben liegenden Kettenlaschen verlängert sein, um eine größere Führungsfläche bereitzustellen.

Die Führungswände befinden sich gemäß einer weiteren vorteilhaften Ausgestaltung in Förderrichtung auf Höhe der wenigstens einen Abstützung.

Um bei einem Erwärmen und Abkühlen der Förderkette keine Spannungen innerhalb der Förderkette zu erzeugen, ist bevorzugt nur jeweils eine Reihe von Kettenlaschen zwischen den Führungswänden angeordnet, während quer dazu die Förderkette nicht nur in Förderrichtung, sondern auch quer dazu verschieblich auf wenigstens einer Abstützung oder wenigstens einer Auflage aufliegt. Dies ermöglicht ein freies Ausdehnen und Zusammenziehen der Förderkette in Folge von Temperaturschwankungen.

Der Förderer kann wenigstens ein Umlenkrad aufweisen, das als eine Doppelscheibe ausgebildet sein kann, zwischen der eine Kettenlasche bevorzugt zusammen mit den beiderseits dazu anliegenden Laschenbereichen der Kettenelemente aufnehmbar und seitlich führbar ist. Die Förderkette wird auf diese Weise durch eine Reihe von in Förderrichtung hintereinander angeordneten Kettenlaschen auf den Umlenkrädern zentriert. Die Umlenkräder können insbesondere mit den Kettenelementen und/oder den Kettenbolzen und/oder den Tragstegen formschlüssig in Eingriff gelangen, um beispielsweise Antriebskräfte zu übertragen.

Ein Ofen mit einer Förderkette oder einem Förderer in einer der oben beschriebenen Ausgestaltungen kann gemäß einer weiteren vorteilhaften Ausgestaltung einen Bestückungsbereich, in dem eine Bestückungsvorrichtung angeordnet ist, und/oder einen Entnahmebereich aufweisen, in dem eine Entnahmevorrichtung angeordnet ist. Zwischen dem Bestückungsbereich und dem Entnahmebereich kann eine Wärmebehandlungszone angeordnet sein, in der die eigentliche Wärmebehandlung der Glasbehälter erfolgt. Im Bestückungsbereich werden die Glasbehälter auf der Förderkette durch die Bestückungsvorrichtung abgelegt. Im Entnahmebereich werden die Glasbehälter durch die Entnahmevorrichtung von der Förderkette entnommen. Bevorzugt befinden sich die wenigstens eine Auflage im Bestückungsbereich und/oder im Entnahmebereich, um dort eine genau definierte Höhenlage der Glasbehälter bereitzustellen. In der Wärmebehandlungszone ist bevorzugt die wenigstens eine Abstützung vorhanden.

Im Folgenden ist die Erfindung anhand einer beispielhaften Ausgestaltung mit Bezug auf die beigefügten Figuren näher erläutert. Dabei ist zu beachten, dass nach Maßgabe der obigen Ausführungen von der Kombination der Merkmale der beispielhaften Ausgestaltung abgewichen werden kann, wenn es auf den technischen Effekt einzelner Merkmale bei einer bestimmten Anwendung nicht ankommen sollte.

Es zeigen:
- Fig. 1: eine schematische Ansicht einer beispielhaften Ausgestaltung einer erfindungsgemäßen Förderkette in einer Ansicht in Förderrichtung;
- Fig. 2: eine schematische Ansicht entlang der Pfeile II-II der beispielhaften Ausgestaltung der Fig. 1;
- Fig. 3: eine schematische Ansicht eines Teils eines Förderers mit der Förderkette der Figuren 1 und 2;
- Fig. 4: eine schematische Ansicht entlang der Pfeile IV-IV der Fig. 3;
- Fig. 5: eine schematische Ansicht entlang der Pfeile V-V der Fig. 3;
- Fig. 6: eine schematische Ansicht entlang der Pfeile VI-VI der Fig. 3.

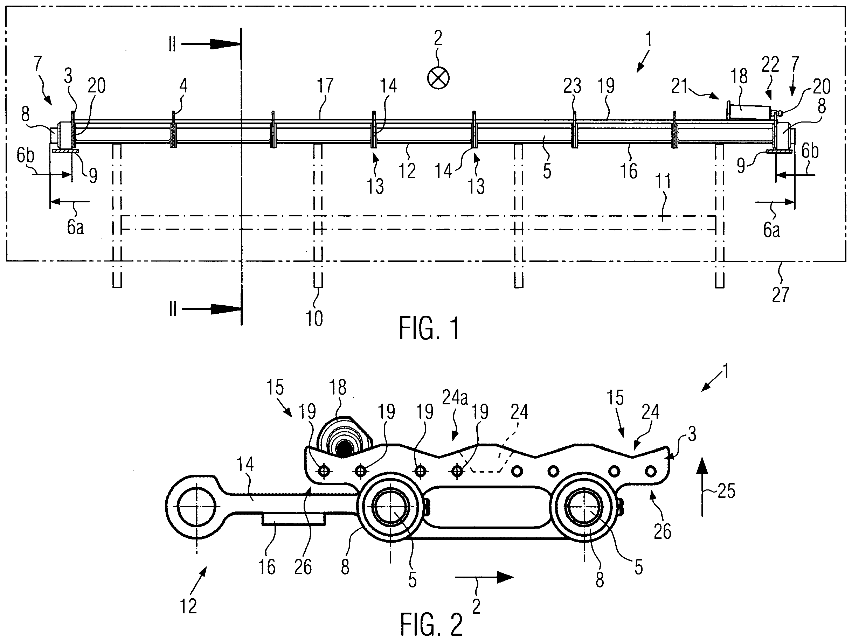

Fig. 1 zeigt eine beispielhafte Ausgestaltung einer erfindungsgemäßen Förderkette 1 in einer schematischen Ansicht in Förderrichtung 2.

Die Förderkette 1 weist eine Mehrzahl von bevorzugt identisch ausgestalteten Kettenlaschen 3 auf, die beispielsweise einfache Stanzteile aus Blech sind. Die Kettenlaschen 3 sind flächig, ihre Flachseiten 4 weisen quer zur Förderrichtung 2.

In Förderrichtung 2 aufeinanderfolgende Kettenlaschen 3 fluchten miteinander, so dass sie auf einer Linie liegen.

Quer zur Förderrichtung 2 nebeneinander liegende Kettenlaschen 3 sind durch Kettenbolzen 5 miteinander verbunden, wobei sich jeder Kettenbolzen 5 über die gesamte Breite 6 der Förderkette einstückig erstreckt.

An den beiden quer zur Förderrichtung 2 gelegenen Enden 7 der Förderkette 1 können Rollen 8 drehbar auf dem Kettenbolzen angebracht sein, damit die Förderkette 1 auf Schienen 9 abrollen kann.

Die Förderkette 1 ist bevorzugt ein Endlosband, das über eine Mehrzahl von quer zur Förderrichtung voneinander beabstandete Umlenkrollen 10 läuft, wobei quer zur Förderrichtung 2 mittig wenigstens eine Umlenkrolle 10 vorgesehen ist, um Antriebskräfte gleichmäßig in die Förderkette 1 einzuleiten. Die Umlenkrollen 10 können auf einer gemeinsamen Welle 11 sitzen.

Quer zur Förderrichtung 2 sind zwischen den Kettenlaschen 3 Kettenelemente 12 angeordnet. Ein Kettenelement 12 weist an seinen beiden quer zur Förderrichtung 2 gelegenen Enden 13 jeweils einen Laschenbereich 14 auf, der flächig ausgestaltet ist und parallel zu den Kettenlaschen 3 ausgerichtet ist. Die innenliegenden Kettenlaschen 3 der Förderkette 1 sind an ihren beiden in Förderrichtung 2 gelegenen Enden 15 jeweils zwischen zwei Kettenelementen 12 bzw. deren Laschenbereichen 14 angeordnet. Die Kettenelemente 12 dienen so als Abstandshalter für die Kettenlaschen 3.

Die beiden Laschenbereiche 14 eines Kettenelements 12 sind durch einen Steg 16 miteinander verbunden, der ebenfalls flächig ausgeführt ist uns im Wesentlichen parallel zu einer Transportebene 17 der Förderkette 1 verläuft.

Das Kettenelement 12 ist bevorzugt ein Stanz-Biegeteil aus einem Blechmaterial.

Die Kettenelemente 12 und die Kettenlaschen 3 sind durch die Kettenbolzen 5 miteinander verbunden, indem sie beide von den Kettenbolzen 5 durchdrungen werden. Fig. 2 zeigt das Grundelement in einer Ansicht entlang der Pfeile II-II, aus dem die Förderkette 1 aufgebaut ist.

Zum Transport von Glasbehältern 18, insbesondere flaschen- oder ampullenförmige Glasbehälter, sind Tragstäbe 19 vorgesehen, die sich parallel zu dem Kettenbolzen 5 über nahezu die gesamte Breite 6 der Förderkette 1 erstrecken und an den quer zur Förderrichtung 2 außen liegenden Kettenlaschen 20 verschiebesicher, beispielsweise durch eine Abdrückung, gehalten sind. Die Tragstäbe 19 durchsetzen bevorzugt ausschließlich die Kettenlaschen 3. Jeweils ein Paar von in Förderrichtung 2 aufeinanderfolgenden Tragstäben 19 bilden eine selbstzentrierende Auflage für ein Ende 21 eines Glasbehälters 18, das mit seinem Außenumfang auf den Tragstäben 19 ruht.

Das andere Ende 22 eines Glasbehälters 18 ruht auf der Oberkante 23 einer Kettenlasche 3, die zu diesem Zweck einen oder mehrere Sitze 24 ausbildet, in denen das Ende 22 ebenfalls bevorzugt selbstzentrierend gehalten ist. Der Sitz 24 kann beispielsweise eine U-, V- oder anders ausgestaltete muldenförmige Vertiefung 24a an der Oberkante 23 der Kettenlasche 3 sein. Jeder Sitz 24 fluchtet mit einem Paar von Tragstäben 19, so dass die Glasbehälter 18 während ihres Transports exakt quer zur Förderrichtung 2 ausgerichtet sind.

Glasbehälter mit unterschiedlichen Durchmessern können von unterschiedlich weit voneinander beabstandeten Paaren von Tragstäben 19 und entsprechenden Sitzen positionsstabil gehalten sein. Um mit einem einzelnen Sitz 24 unterschiedliche Größen von Glasbehältern 8 zu transportieren, können die Paare von Tragstäben 19 auch in einer Höhenrichtung 25 der Kettenlasche gestaffelt sein, wobei die näher zur Oberkante 23 der Kettenlasche 3 liegenden Paare von Tragstäben 19 weiter beabstandet sind, als die weiter von der Oberkante 23 beabstandeten Tragstäbe.

Wie in Fig. 2 zu erkennen ist, ist das Kettenelement 12 in Förderrichtung 2 kürzer als die Kettenlasche 3. Die Kettenlasche 3 weist in und entgegen der Förderrichtung vorspringende Fortsätze 26 an ihren beiden Enden 15 auf, die die beiden in und entgegen der Förderrichtung 2 folgenden Kettenelemente 12 überragen. An den Fortsätzen 26 ist bevorzugt jeweils ein Sitz 24 ausgebildet. Dank der Fortsätze 26 entstehen zwischen den Kettenlaschen 3 in Förderrichtung 2 keine Lücken, so dass die gesamte Länge der Förderkette 1 zum Einlegen von Glasbehältern 18 genutzt werden kann. Die Anzahl der Kettenlaschen quer zur Förderrichtung 2 bestimmt sich nach der Länge der zu transportierenden Glasbehälter und der vom Benutzer gewählten Transportart.

Der Kettenbolzen 5 kann ebenfalls als Auflage für ein Ende eines Glasbehälters dienen.

Die Förderkette 1 dient insbesondere zur Wärmebehandlung von beispielsweise bedruckten Glasbehältern 18. Aufgrund der sehr kleinen Berührungsflächen zwischen der Förderkette 1 und den Glasbehältern 18 bleibt der Aufdruck unbeeinträchtigt. Beim Transport durch einen Ofen 27 kann die Luft zwischen den Tragstäben 19, den Kettenbolzen 5 und den Stegen 16 unbehindert zirkulieren oder Infrarot-Strahlung ohne große Verschattungen auf die Glasbehälter 18 gerichtet werden, so dass eine sehr gleichmäßige Erwärmung der Glasbehälter 18 erreicht wird. Gleiches gilt für die Abkühlung der Glasbehälter 18 in nachfolgenden Schritten.

Die Förderkette 1 ist quer zur Förderrichtung 2 starr und ändert ihre Breite 6 abhängig von der Betriebstemperatur.

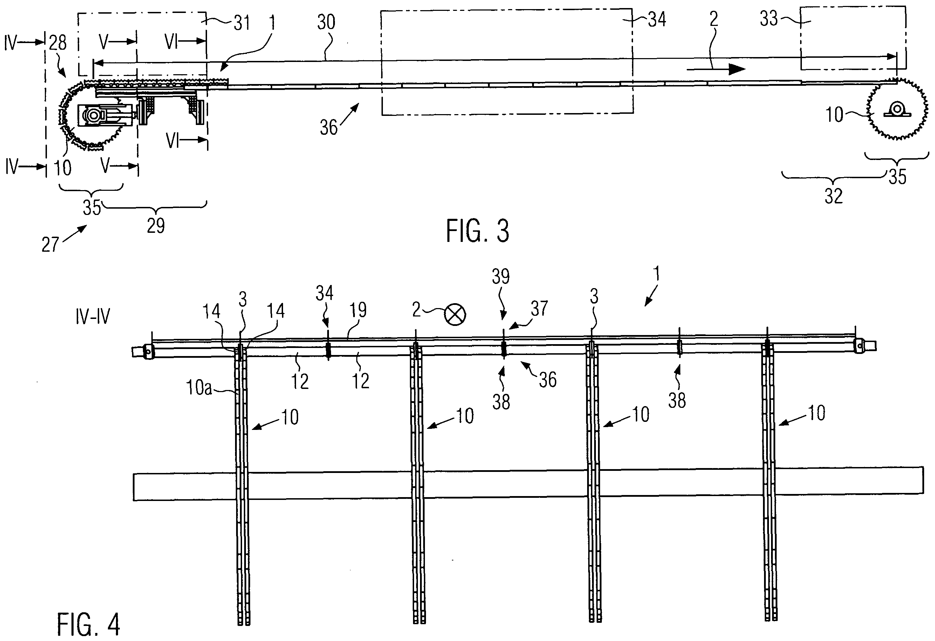

In den Figuren 3 bis 6 ist ein Förderer 28 mit einer Förderkette 1 gezeigt. Der Förderer 28 kann insbesondere Teil eines Ofens 27 sein.

Der Ofen 27 bzw. Förderer kann einen Bestückungsbereich 29 aufweisen, der insbesondere am Anfang einer Förderstrecke liegen kann. Im Bestückungsbereich 29 befindet sich eine Bestückungsvorrichtung 31, mit der Glasbehälter (in Fig. 3 bis 4 nicht gezeigt) auf der Förderkette 1 abgelegt werden. In Förderrichtung 2 hinter dem Bestückungsbereich 29 kann sich ein Entnahmebereich 32 befinden. Der Entnahmebereich 32 liegt bevorzugt am Ende der Förderstrecke 30. Im Entnahmebereich 32 befindet sich eine Entnahmevorrichtung 33, mit der die Glasbehälter von der Förderkette 1 entnommen werden. Die Bestückungsvorrichtung 31 und/oder die Entnahmevorrichtung 33 können zur Handhabung der Glasbehälter beispielsweise mit automatischen Greifern (nicht gezeigt) versehen sein.

Zwischen dem Bestückungsbereich 29 und dem Entnahmebereich 32 kann eine Wärmebehandlungszone 34 angeordnet sein, in der die Glasbehälter bevorzugt mit Infrarotstrahlen (nicht gezeigt) wärmebehandelt werden. Die Förderstrecke 30 erstreckt sich bevorzugt durch die Wärmebehandlungszone 34 hindurch, so dass sich die Förderkette 1 in der Wärmebehandlungszone 34 ebenfalls erwärmt.

Die Förderstrecke 30 erstreckt sich zwischen zwei Umlenkzonen 35, an denen die Förderkette 1 um die Umlenkrollen 10 geführt ist.

Wie Fig. 4 zeigt, sind die Umlenkrollen 10 als Doppelscheiben 10a ausgestaltet, deren Abstand quer zur Förderrichtung 2 etwa der Breite der Kettenlaschen 3 mit den daran anliegenden Laschenbereichen 14 quer zur Förderrichtung 2 entspricht. Die Kettenlaschen 3 mit den an beiden Seiten anliegenden Laschenbereichen 14 des Kettenelementes 12 sind an den Umlenkzonen 35 zwischen die Doppelscheiben 10a eingetaucht und somit in Förderrichtung 2 von den Doppelscheiben 10a geführt. Dies bewirkt eine Zentrierung der Förderkette 1 quer zur Förderrichtung 2. Die Umlenkrollen 10 gelangen bevorzugt mit den Kettenbolzen 5 (Fig. 1) in Eingriff.

An der Unterseite 36 der Förderkette 1 stehen die Kettenlaschen 3 nach unten vor. Eine Reihe 37 von in Förderrichtung 2 hintereinander angeordneten bzw. fluchtenden Kettenlaschen 3 bildet somit an der Unterseite 36 eine sich entlang der Förderrichtung 2 erstreckende segmentierte Kufe 38.

In der Mitte 39 der Förderkette 1 können die Kettenlaschen 3 an ihrer Unterseite 36 gegenüber den quer zur Förderrichtung 2 daneben liegenden Kettenlaschen 3 verlängert sein.

Zwischen den Umlenkzonen 35 ist die Förderkette 1 bevorzugt von unten abgestützt.

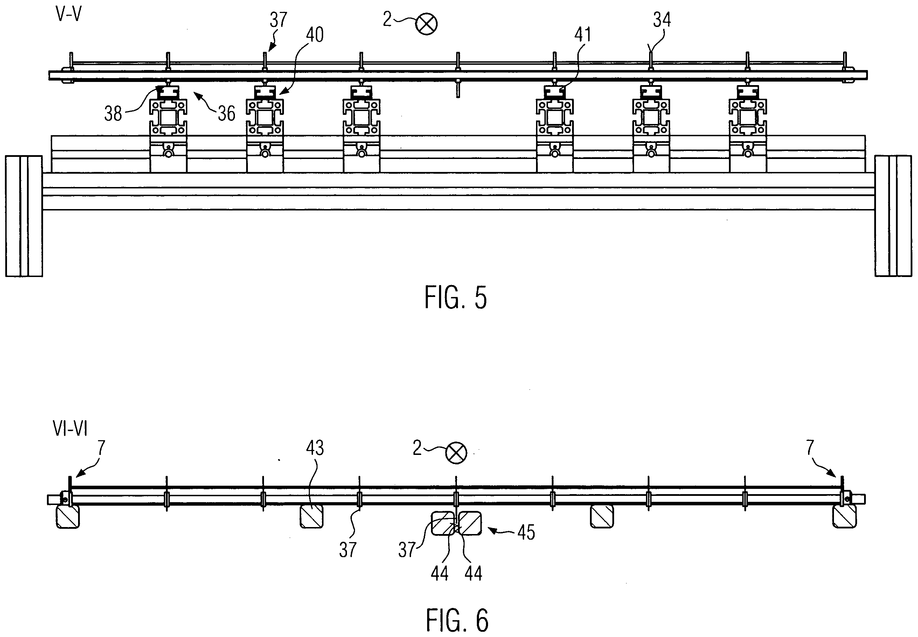

In Fig. 5 ist gezeigt, dass die Kufen 38 bildenden Verlängerungen der Kettenlaschen 3 an der Unterseite 36 auf schienenförmigen Auflagen 40 in Förderrichtung 2 verschieblich aufliegen können. Auf einer Auflage 40 ist jeweils eine Reihe 37 von Kettenlaschen 3 von einer Auflage 40 abgestützt. Die Auflagen erstrecken sich in Förderrichtung 2. Wenigstens eine Auflage 40 ist vorgesehen. Die Auflagen 40 können eine Gleitfläche 41 aufweisen, die Teil eines austauschbaren Auflageelements 42 ist. Das austauschbare Auflageelement 42 kann eine Gleitfläche 41 aus poliertem und gehärtetem Stahl oder einem Kunststoff aufweisen.

Die Auflagen 40, auf denen die Kettenlaschen 3 unmittelbar aufliegen, werden bevorzugt in Bereichen eingesetzt, in denen auf die Glasbehälter auf der Förderkette 1 zugegriffen werden muss. Dies ist beispielsweise im Bestückungsbereich 29 und im Entnahmebereich 32 der Fall. Durch die unmittelbare Auflage der Kettenlaschen 3 auf den Gleitflächen 41 ist die Höhenlage der Sitze 34 innerhalb der Fertigungstoleranzen der Kettenlasche 3 bestimmt und somit sehr genau.

Um einen gleichmäßigen Verschleiß der Kette hervorzurufen, ist in Bereichen, in denen nicht auf die Glasbehälter auf der Förderkette 1 zugegriffen werden muss, bevorzugt die Förderkette 1 an ihrer Unterseite 36 an anderen Stellen abgestützt. Eine derartige Abstützung kann beispielsweise in der Wärmebehandlungszone 34 vorliegen. In diesem Fall sollte eine thermische Ausdehnung und ein Zusammenziehen der Förderkette 1 im Zuge der Erwärmung und Abkühlung beim Durchwandern der Wärmebehandlungszone 34 möglich sein.

Wie Fig. 6 zeigt, kann in einem solchen Fall wenigstens eine Abstützung 43 vorhanden sein, die sich ebenfalls schienenförmig in Förderrichtung 2 erstreckt. Auf der Abstützung 43 liegen bevorzugt die Stege 16 in Förderrichtung 2 verschieblich auf.

Durch die Verwendung der Auflagen 40 für die Kettenlaschen 3 und der Abstützungen 43 für die Stege 16 werden sowohl die Kettenlaschen 3 als auch die Kettenelemente 12 belastet, so dass der Verschleiß über die Betriebsdauer der Förderkette auf unterschiedliche Elemente verteilt wird.

Wie Fig. 6 noch zeigt, kann die Kufe 38, insbesondere die verlängerte Kufe 38 der mittig angeordneten Kettenlaschen 3 auch zur Zentrierung der Förderkette 1 verwendet werden. So kann eine Kufe 38 zwischen zwei sich gegenüberliegenden, in Förderrichtung 2 sich erstreckenden Führungswänden 44 geführt und gegen seitliches Ausweichen gesichert sein.

Diese Art der Zentrierung 45 kann zusammen mit den Auflagen 40 und/oder den Abstützungen 43 erfolgen.

An den seitlichen Enden 7 kann die Förderkette 1 ebenfalls unten abgestützt sein, bevorzugt in dem Bereich, in dem die Abstützungen 43 vorgesehen sind.

### Bezugszeichen

- 1: Förderkette
- 2: Förderrichtung
- 3: Kettenlasche
- 4: Flachseite einer Kettenlasche
- 5: Kettenbolzen
- 6: Breite der Förderkette
- 6b: Förderbreite der Förderkette
- 7: seitliches Ende der Förderkette
- 8: Rolle
- 9: Schiene
- 10: Umlenkrolle der Förderkette
- 10a: Doppelscheibe
- 11: Welle
- 12: Kettenelement
- 13: Ende eines Kettenelements quer zur Förderrichtung
- 14: Laschenbereich eines Kettenelements
- 15: Ende in Förderrichtung einer Kettenlasche
- 16: Steg eines Kettenelements
- 17: Transportebene der Förderkette
- 18: Glasbehälter
- 19: Tragstab
- 20: außen liegende Kettenlasche
- 21: ein Ende eines Glasbehälters
- 22: anderes Ende eines Glasbehälters
- 23: Oberkante einer Kettenlasche
- 24: Sitz
- 24a: Vertiefung
- 25: Höhenrichtung
- 26: Fortsatz
- 27: Ofen
- 28: Förderer
- 29: Bestückungsbereich
- 30: Förderstrecke
- 31: Bestückungsvorrichtung
- 32: Entnahmebereich
- 33: Entnahmevorrichtung
- 34: Wärmebehandlungszone
- 35: Umlenkzonen
- 36: Unterseite
- 37: Reihe von Kettenlaschen
- 38: Kufe
- 39: Mitte der Förderkette
- 40: Auflagen
- 41: Gleitfläche
- 42: austauschbares Auflageelement
- 43: Abstützung
- 44: Führungswände
- 45: Zentrierung

## Patentansprüche

1. Förderkette (1) zum Transport von insbesondere ampullen- oder flaschenförmigen Glasbehältern (18) durch einen Ofen (27), mit quer zu einer Förderrichtung (2) beabstandet voneinander und parallel zueinander angeordneten Kettenlaschen (3), **dadurch gekennzeichnet, dass** die Kettenlaschen (3) an ihren Oberkanten (23) Sitze (24) für ein Ende (22) der Glasbehälter (18) ausbilden.

2. Förderkette (1) nach Anspruch 1, **dadurch gekennzeichnet, dass** ein Sitz (24) von wenigstens einer Vertiefung (24a) der Oberkante (23) einer Kettenlasche (3) gebildet sind.

3. Förderkette (1) nach Anspruch 1 oder 2, **dadurch gekennzeichnet, dass** in Förderrichtung (2) aufeinanderfolgende Kettenlaschen (3) miteinander fluchten.

4. Förderkette (1) nach einem der Ansprüche 1 bis 3, **dadurch gekennzeichnet, dass** sich zwischen zwei quer zur Förderrichtung (2) benachbarten Kettenlaschen (3) wenigstens ein Paar von Tragstäben (19) zur Auflage eines anderen Endes (21) des Glasbehälters (18) erstreckt.

5. Förderkette (1) nach Anspruch 4, **dadurch gekennzeichnet, dass** sich die Tragstäbe (19) quer zur Förderrichtung (2) über die gesamte Förderbreite (6b) der Förderkette (1) erstrecken.

6. Förderkette (1) nach einem der Ansprüche 1 bis 5, **dadurch gekennzeichnet, dass** Kettenbolzen (5) vorgesehen sind, die sich über die gesamte Breite (6) der Förderkette (1) erstrecken und nebeneinander liegende Kettenlaschen (3) miteinander verbinden.

7. Förderkette (1) nach einem der Ansprüche 1 bis 6, **dadurch gekennzeichnet, dass** wenigstens ein Paar von quer zur Förderrichtung (2) beabstandet angeordneten Kettenlaschen (5) mit einem in Förderrichtung (2) folgenden Paar durch ein zwischen den beiden Kettenlaschen (3) der Paare angeordnetes U-förmiges Kettenelement (12) miteinander verbunden sind.

8. Förderkette (1) nach Anspruch 7, **dadurch gekennzeichnet, dass** das Kettenelement (12) an den quer zur Förderrichtung (2) gelegenen Enden (13) mit zwei parallel zu den Kettenlaschen (3) ausgerichteten Laschenbereichen (14) versehen ist, die durch einen parallel zu den Kettenbolzen (5) verlaufenden Steg (16) miteinander verbunden sind.

9. Förderkette (1) nach Anspruch 7 oder 8, **dadurch gekennzeichnet, dass** zwei quer zur Kettenrichtung (2) benachbarte Kettenlaschen (3) von dem Kettenelement (12) beabstandet gehalten sind.

10. Förderer (28) mit einer Förderkette (1) nach einem der Ansprüche 1 bis 9, **gekennzeichnet durch** wenigstens eine schienenförmige Auflage (40), auf der in Förderrichtung (2) hintereinander liegende Kettenlaschen (3) in Förderrichtung (2) verschieblich aufliegen.

11. Förderer (28) nach Anspruch 10 oder mit einer Förderkette nach einem der Ansprüche 1 bis 9, **gekennzeichnet durch** wenigstens eine schienenförmige Abstützung (43), auf der sich zwischen den Kettenlaschen (3) erstreckende Stege (16) in Förderrichtung (2) verschieblich aufliegen.

12. Förderer (28) nach Anspruch 10 oder 11, **dadurch gekennzeichnet, dass** in Förderrichtung (2) die wenigstens eine Abstützung (43) hinter der wenigstens einen Auflage (40) angeordnet ist.

13. Förderer (28) nach einem der Ansprüche 10 bis 12 oder mit einer Förderkette (1) nach einem der Ansprüche 1 bis 9, **dadurch gekennzeichnet, dass** in Förderrichtung (2) hintereinander angeordnete Kettenlaschen (3) an ihrer von den Sitzen (34) abgewandten Unterseite (36) zwischen zwei sich quer zur Förderrichtung (2) gegenüberliegenden Führungswänden (44) in Förderrichtung (2) verschieblich geführt sind.

14. Förderer (28) nach Anspruch 13, **dadurch gekennzeichnet, dass** sich die Führungswände (44) in Förderrichtung (2) auf Höhe der wenigstens einen Abstützung (43) befinden.

15. Ofen (27) mit einer Förderkette (1) nach einem der Ansprüche 1 bis 9 oder einem Förderer (28) nach einem der Ansprüche 10 bis 14, **dadurch gekennzeichnet, dass** ein Bestückungsbereich (29) zur Ablage von Glasbehältern (18) auf der Förderkette (1) durch eine Bestückungsvorrichtung (31) und einem in Förderrichtung (2) hinter dem Bestückungsbereich (29) angeordneten Entnahmebereich (32) zur Entnahme von Glasbehältern (18) von der Förderkette (1) durch eine Entnahmevorrichtung (33) vorgesehen sind und dass die Förderkette (1) im Bestückungsbereich (29) und im Entnahmebereich (32) auf den Kettenlaschen (3) abgestützt ist.

## Claims

1. A conveyor chain (1) for transporting in particular ampoule-shaped or bottle-shaped glass containers (18) through a furnace (27), with link plates (3) disposed transversely to the conveying direction (2), parallel to one another and at a distance from each other, **characterized in that**, at their upper edges (23), the link plates (3) form seats (24) for one end (22) of the glass containers (18).

2. The conveyor chain (1) according to claim 1, **characterized in that** a seat (24) is formed by at least one recess (42a) in the upper edge (23) of a link plate (3).

3. The conveyor chain (1) according to claim 1 or 2, **characterized in that** link plates (3) successively arranged in the conveying direction (2) are aligned with one another.

4. The conveyor chain (1) according to one of the claims 1 to 3, **characterized in that** at least one pair of support bars (19) for bearing another end (21) of the glass containers (18) extends between two link plates (3) that are adjacent to each other transversely to the conveying direction (2).

5. The conveyor chain (1) according to claim 4, **characterized in that** the support bars (19) extend transversely to the conveying direction (2) across the entire conveying width (6b) of the conveyor chain (1).

6. The conveyor chain (1) according to one of the claims 1 to 5, **characterized in that** chain pins (5) are provided, which extend across the entire width (6) of the conveyor chain (1) and connect adjacent link plates (3) with each other.

7. The conveyor chain (1) according to one of the claims 1 to 6, **characterized in that** at least one pair of link plates (3) spaced-apart transversely to the conveying direction (2) are connected with a subsequent pair in the conveying direction (2) by a U-shaped chain element (12) disposed between the two link plates (3) of the pairs.

8. The conveyor chain (1) according to claim 7, **characterized in that**, at its ends (13) located transversely to the conveying direction (2), the chain element (12) is provided with two link areas (14), oriented parallel to the link plates (3) and connected with each other by a bar (16) extending parallel to the chain bolts (5).

9. The conveyor chain (1) according to claim 7 or 8, **characterized in that** two link plates (3) that are adjacent transversely to the conveying direction (2) are maintained at a distance from the chain element (12).

10. A conveyor (28) with a conveyor chain (1) according to one of the claims 1 to 9, **characterized by** at least one rail-shaped bearing (40), on which link plates (3), that are consecutively arranged in the conveying direction (2), rest in such a manner that they are displaceable in the conveying direction (2).

11. The conveyor (28) according to claim 10, or with a conveyor chain according to one of the claims 1 to 9, **characterized by** at least one rail-shaped support (43), on which bars (16) extending between the link plates (3) rest in such a manner that they are displaceable in the conveying direction (2).

12. The conveyor (28) according to claim 10 or 11, **characterized in that** the at least one support (43) is disposed behind the at least one bearing (40) in the conveying direction (2).

13. The conveyor (28) according to one of the claims 10 to 12 or with a conveyor chain (1) according to one of the claims 1 to 9, **characterized in that** link plates (3) successively disposed in the conveying direction (2) are displaceably guided, in the conveying direction (2), on their bottom side (36) facing away from the seats (34), between two guide walls (44) facing one another transversely to the conveying direction (2).

14. The conveyor (28) according to claim 13, **characterized in that** the guide walls (44) are located on a level with the at least one support (43) in the conveying direction (2).

15. A furnace (27) with a conveyor chain (1) according to one of the claims 1 to 9 or a conveyor (28) according to one of the claims 10 to 14, **characterized in that** a loading area (29) for placing glass containers (18) on the conveyor chain (1) by means of a placer device (31) and an unloading area (32) disposed behind the loading area (29) in the conveying direction (2) for removing glass containers (18) from the conveyor chain (1) by means of a unloading device (33) are provided and that the conveyor chain (1) is supported on the link plates (3) in the loading area (29) and in the unloading area (32).

## Revendications

1. Chaine de transport (1) pour le transport de contenants (18) en verre, notamment en forme d'ampoule ou de bouteille, à travers un four (27), comprenant des éclisses de chaine (3) agencées de manière espacée les unes des autres transversalement à une direction de transport (2), et parallèlement les unes par rapport aux autres,
**caractérisée en ce que** les éclisses de chaine (3) forment sur leur bords supérieurs (23) des sièges d'appui (24) pour une extrémité (22) des contenants (18) en verre.

2. Chaine de transport (1) selon la revendication 1, **caractérisée en ce qu'**un siège d'appui (24) est formé par au moins un creux (24a) dans le bord supérieur (23) d'une éclisse de chaine (3).

3. Chaine de transport (1) selon la revendication 1 ou la revendication 2, **caractérisée en ce que** des éclisses de chaine (3) se succédant dans la direction de transport (2), sont mutuellement alignées.

4. Chaine de transport (1) selon l'une des revendications 1 à 3, **caractérisée en ce qu'**entre deux éclisses de chaine (3) voisines transversalement à la direction de transport (2), s'étendent au moins une paire de tiges de support (19) pour l'appui d'une autre extrémité (21) du contenant (18) en verre.

5. Chaine de transport (1) selon la revendication 4, **caractérisée en ce que** les tiges de support (19) s'étendent transversalement à la direction de transport (2) sur la totalité de la largeur de transport (6b) de la chaine de transport (1).

6. Chaine de transport (1) selon l'une des revendications 1 à 5, **caractérisée en ce que** sont prévus des axes de chaine (5), qui s'étendent sur la totalité de la largeur (6) de la chaine de transport (1), et relient ensemble des éclisses de chaine (3) situées côte à côte.

7. Chaine de transport (1) selon l'une des revendications 1 à 6, **caractérisée en ce qu'**au moins une paire d'éclisses de chaine (3) agencées de manière espacée transversalement à la direction de transport (2), est reliée à une paire suivante dans la direction de transport (2), par un élément de chaine (12) en forme de U, agencé entre les deux éclisses de chaine (3) desdites paires.

8. Chaine de transport (1) selon la revendication 7, **caractérisée en ce que** l'élément de chaine (12) est pourvu, aux extrémités (13) placées transversalement à la direction de transport (2), de deux zones d'éclisse (14) orientées parallèlement aux éclisses de chaine (3), et qui sont reliées mutuellement par une branche (16) s'étendant parallèlement aux axes de chaine (5).

9. Chaine de transport (1) selon la revendication 7 ou la revendication 8, **caractérisée en ce que** deux éclisses de chaine (3) voisines transversalement à la direction de chaine (2), sont maintenues espacées par l'élément de chaine (12).

10. Transporteur (28) comprenant une chaine de transport (1) selon l'une des revendications 1 à 9, **caractérisé par** au moins un appui (40) en forme de rail, sur lequel reposent de manière à pouvoir coulisser dans la direction de transport (2), des éclisses de chaine (3) se succédant dans la direction de transport (2).

11. Transporteur (28) selon la revendication 10 ou bien comportant une chaine de transport selon l'une des revendications 1 à 9, **caractérisé par** au moins un support de soutien (43) en forme de rail, sur lequel reposent de manière à pouvoir coulisser dans la direction de transport (2), des branches (16) s'étendant entre les éclisses de chaine (3).

12. Transporteur (28) selon la revendication 10 ou la revendication 11, **caractérisé en ce que** dans la direction de transport (2), ledit au moins un support de soutien (43) est agencé derrière ledit au moins un appui (40) .

13. Transporteur (28) selon l'une des revendications 10 à 12 ou bien comportant une chaine de transport (1) selon l'une des revendications 1 à 9, **caractérisé en ce que** des éclisses de chaine (3) agencées de manière successive dans la direction de transport (2), sont guidées de manière à pouvoir coulisser dans la direction de transport (2), sur leur côté inférieur (36) opposé à celui où se trouvent les sièges d'appui (34), entre des parois de guidage (44) se faisant face transversalement à la direction de transport (2).

14. Transporteur (28) selon la revendication 13, **caractérisé en ce que** les parois de guidage (44) se trouvent, dans la direction de transport (2), à hauteur dudit au moins un support de soutien (43).

15. Four (27) avec une chaine de transport (1) selon l'une des revendications 1 à 9 ou un transporteur (28) selon l'une des revendications 10 à 14, **caractérisé en ce que** sont prévues une zone de chargement (29) destinée à la dépose de contenants (18) en verre sur la chaine de transport (1) à l'aide d'un dispositif de chargement (31), et une zone de prélèvement (32) agencée en aval de la zone de chargement (29) en se référant à la direction de transport (2), et destinée à prélever des contenants (18) en verre de la chaine de transport (1) à l'aide d'un dispositif de prélèvement (33), et **en ce que** la chaine de transport (1) est soutenue au niveau des éclisses de chaine (3) dans la zone de chargement (29) et dans la zone de prélèvement (32).
